Europäisches Patentamt

European Patent Office

Office européen des brevets

(19)

(11) **EP 0 806 632 B1**

(12) **EUROPEAN PATENT SPECIFICATION**

(45) Date of publication and mention
of the grant of the patent:
**14.04.1999  Bulletin 1999/15**

(51) Int Cl.⁶: **G01C 21/20**

(21) Application number: **97830208.1**

(22) Date of filing: **02.05.1997**

(54) **Vehicle navigation system with automatic calibration of on-board sensors**

Fahrzeugnavigationssystem mit automatischer Kalibrierung der Bordsensoren

Système de navigation véhiculaire avec étalonnage automatique des capteurs embarqués

(84) Designated Contracting States:
**DE ES FR GB**

(30) Priority:  **09.05.1996  IT  TO960382**

(43) Date of publication of application:
**12.11.1997  Bulletin 1997/46**

(73) Proprietor: **MAGNETI MARELLI S.p.A.**
**20145 Milano (IT)**

(72) Inventor: **Nerbolino, Stefano**
**10100 Torino (IT)**

(74) Representative: **Notaro, Giancarlo et al**
**c/o Buzzi, Notaro & Antonielli d'Oulx srl,**
**Corso Fiume 6**
**10133 Torino (IT)**

(56) References cited:
**EP-A- 0 453 726          EP-A- 0 519 630**
**US-A- 4 713 767          US-A- 4 903 212**

- **PATENT ABSTRACTS OF JAPAN vol. 95, no. 010 & JP 07 253328 A (NISSAN MOTOR CO LTD), 3 October 1995,**
- **PATENT ABSTRACTS OF JAPAN vol. 013, no. 256 (P-884), 14 June 1989 & JP 01 053180 A (JAPAN RADIO CO LTD;OTHERS: 01), 1 March 1989,**

## Description

The present invention relates to motor-vehicle navigation systems of the type indicated in the pre-characterizing portion of Claim 1.

The Applicant has implemented a navigation system of the above indicated type in which said sensor means comprises an odometer and a rate gyro for measuring the travelled distance and the direction of travel, respectively, so as to enable the computer means to update the vehicle position continuously.

The odometer is a linear movement sensor and provides a number of pulses proportional to the travelled distance. The output signal is therefore usually a square (or triangular or sinusoidal, etc.) wave, whose frequency is directly proportional to the motor-vehicle speed.

The rate gyro is a device sensitive to the angular speed. The output signal of the rate gyro, when integrated, gives a measure of the change of direction of the motor-vehicle. Said navigation system implemented by the Applicant also comprises a GPS receiver, i.e. an apparatus able to determine the absolute position and the absolute speed of the motor-vehicle in space by measuring the fly time of signals coming from a constellation of satellites which are located on fixed orbits around the Earth.

According to the prior art, the determination of the position and the direction of the motor-vehicle is carried out first of all by reading the data at the output of the rate gyro and the odometer. This technique is called "dead reckoning" and enables the displacement and the change of direction of the vehicle with the time to be estimated with a precision which is the greater the more the sensors lack of defects and are correctly adjusted. It is to be noted that the dead reckoning operation has a "relative" nature. This operation is indeed able to determine exclusively the variations with respect to a given initial condition. Obviously, even small errors in the knowledge of the initial direction, integrated with the time, cause an increasing error of the exact position of the vehicle. For a good operation of the dead reckoning it is therefore necessary to have an "absolute" reference on the direction and position, which is independent from the initial conditions and the past history. An absolute reference, as far as the position is concerned, can be provided by GPS receivers. The GPS system is indeed able to evaluate with a precision of some hundreds meters (in the worst case) the absolute position of the motor-vehicle by providing the North and East co-ordinates of the point and updating them for example at each second. From the information on speed provided by the GPS system it is also possible to derive the absolute direction of movement of the vehicle.

Another information source which, according to the known technique, is used by the navigation system to improve the localisation of the vehicle is the digitalized map of the territory included within the map database. Starting indeed from the assumption that the vehicle is travelling on a net of mapped roads, it is understood how it is possible to use the absolute information of the road position in order to determine the vehicle position, by recognizing and adapting the vehicle path on the map grating. This localisation technique, based on the assumption that the vehicle travels on roads mapped properly, is called "map matching".

The dead reckoning operation provides a navigation which is the more accurate the better are the sensors which are used.

Because of the "integrative" nature of the dead reckoning operation, the precision faults introduced by the sensors cause localisation errors which tend to increase with the time in an exponential way, to such an extent as to render absolutely necessary to rely on the absolute information provided by the GPS and the map matching. The less precise are the sensors, the more frequent is this technique.

The problem which is at the basis of the present invention is that of the adjustment, or calibration, of the sensor means. The use of the information coming from each sensor is indeed subordinated to the adjustment thereof, i.e. to the determination of the conversion factors from the measure units at the output of the sensor to the measure units which are used by the navigation system (for example from mV to angle degrees).

This problem has been solved in a different manner by the manufacturers of navigation systems. Usually there are provided calibration methods for the sensors. According to the prior art, the calibrations are carried out a first time when the system is installed on the motor-vehicle, but generally they must be repeated later on periodically, since the sensors change their features with the time and also because the motor-vehicle conditions are not constant with the time, for example because of the wear of the tires. The calibration methods often require several minutes and the knowledge of specific information such as the exact length of a road portion and the geographical orientation thereof. The stability features of the sensors are important in order to carry out a good calibration. Ideally, it should be possible to calibrate the sensors continuously, since the ambient conditions (temperature) and the operative conditions (vehicle load and speed) change at every minute and no type of sensor is so stable as not to be affected at all by these variations.

A navigation system of the type indicated in the pre-characterizing portion of Claim 1 is disclosed in EP-A-0 519 630. It is also to be noted that the concept of using GPS derived data to calibrate or correct on-board sensor data is known from a number of documents (EP-A-0 453 726, US-A-4 903 212, JP 07 253328 A, JP 01 053180 A). However, none of the known systems is totally satisfactory.

The object of the present invention is that of solving satisfactorily all the above indicated problems.

According to the invention, this object is achieved by the features indicated in Claim 1.

The invention is further particularly advantageous in case the navigation system is put on sale in order to be installed on motor-vehicles which came out of the production without a system of this type. In such a case, indeed, it is impossible to know in advance the features of the motor-vehicle on which the system is to operate and on the other hand there is an economic advantage to avoid requiring the assistance of specialized personnel in order to carry out the adjustment operations.

Further features and advantages of the invention will become apparent from the description which follows with reference to the annexed drawing given purely by way of non-limiting example, which shows diagrammatically a motor-vehicle provided with a system according to the invention.

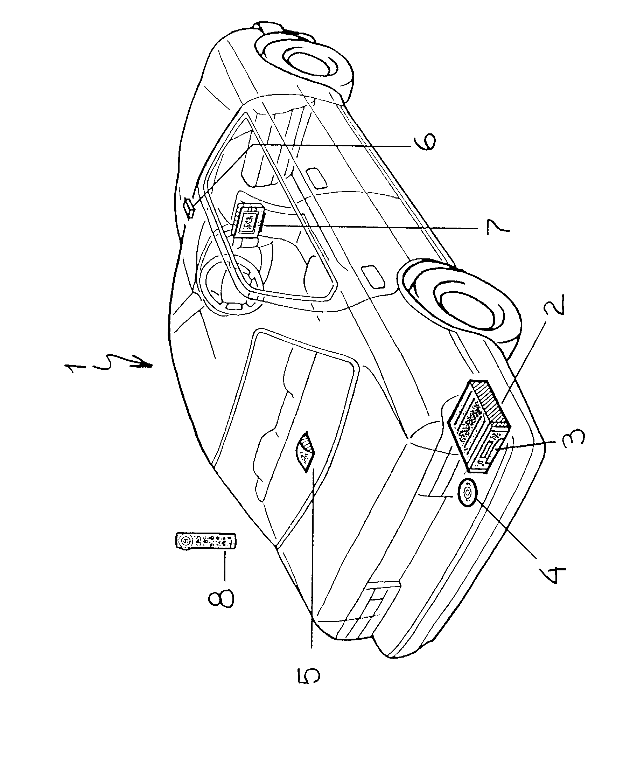

In the drawing, reference numeral 1 generally designates a motor-vehicle provided with a navigation system according to the invention, comprising a computer 2, including a rate gyro and a reader 3 for a CD ROM 4, which can be conveniently housed within the rear luggage compartment of the motor-vehicle. Reference numerals 5 and 6 respectively designate a satellite GPS receiver and an odometer, of the type known per se. On the motor-vehicle dashboard there is mounted the video display 7, incorporating a speaker, while the driver may avail himself of a remote control 8 (or alternatively a keyboard) for activating the various system functions. The CD ROM 4 includes a database of digitalized maps of the roads network of interest.

The odometer 6 is a displacement sensor. It generates pulses with a frequency which is directly proportional to the rotational speed of the rotating part (transmission shaft, wheel, etc.) on which the sensor is applied. The odometer used in the system according to the invention may be of any known type. At present there are about ten different types of odometer on sale, with different sensibility. The characteristics provided by the manufacturers are usually expressed as pulses for round, but, from the stand point of use, the evaluation can be carried out directly on the basis of the ratio between the pulse number and the length of the distance travelled by the motor-vehicle. In this manner all the important parameters are introduced in the computation and evaluated, including the value of the circumference of the wheel and the transmission ratio between the point at which the odometer sensor is applied and the wheel itself. It is therefore to be noted that the problem involved is to evaluate simultaneously many factors, which at last becomes that of the computation of the conversion factor between pulses and meters (or vice versa). The problem of the odometer calibration substantially lies in determine the "weight" of each pulse, i.e. how many meters or centimetres correspond thereto. Each odometer has a scale factor which is substantially stable with the time, and different for different types of instrument. However, the conversion factor between pulses and meters depends from the circumference of the wheels and hence from the type of tires, the pressure thereof, the wear thereof, the load of the vehicle and its speed. In the following, reference will be made therefore to a scale factor of the odometer which is the real conversion factor between pulses generated by the instrument and meters travelled by the motor-vehicle.

According to the invention, the system determines the scale factor of the odometer by comparing the linear speed computed by the GPS with the number of pulses coming during the same second from the odometer. If the speed computed by the GPS were a perfect measure of the motor-vehicle speed, the scale factor of the odometer would be immediately determined by the following formula:

$$OSF\left(\frac{[m]}{[pulse]}\right) = \frac{SpeedGPS[m/s]}{Number\ of\ odometer\ pulses\ per\ second\ [pulse/s]}$$

Actually, the algorithm used by the system to carry out the odometer self-calibration is not merely the above indicated formula, because of various errors in the determination of the quantities at numeratore and denominatore in the formula.

The GPS receiver determines the motor-vehicle speed by Doppler effect on the basis of the frequency of the signal received by each satellite on view. The relative speed between the vehicle and the satellite is never zero, since the satellites are not geostationary, and hence there is always a frequency displacement on the signal due to the Doppler effect. The speed evaluation is therefore connected to the increase or decrease of this effect, due to the movement of the vehicle on the earth surface. unfortunately, the precision of this evaluation is strongly affected by the position of the satellites with respect to the vehicle and the presence of reflections of the signal on obstacles close to the motor-vehicle.

The GPS speed evaluation can be separated into two contributions: a first one is that connected to the actual movement of the vehicle, whereas the other one is the measurement error, which can not be evaluated exactly and depends from the receiving conditions.

In order to reduce the contribution percentage of the error on the evaluation, the system according to the invention uses the GPS speed value only when this is greater than a pre-determined threshold value K (for example 12,5 m/s), and this GPS speed value is "weighed" as a function of the value itself. By assuming indeed that the error component is always lower than a value L (for example 1 m/s), this value has a lower influence if the speed of the vehicle is greater. There are then other measurement errors which affect the algorithm precision and cause the samples relating to high speeds to weigh more. The counting of the number of the odometer pulses at the last second has indeed the precision of 1, more or less, depending upon the time when the counting is "closed". Since in the case of low resolution odometers a pulse may correspond to several meters, it follows that may be a high imprecision in the speed evaluation, when the latter is in the order of a few m/s. In order to avoid that the GPS speed measurement is affected by reflections, which are able to heavily decrease the accuracy, a control has been introduced of the acceleration between two consecutive GPS speed samples. The acceleration control is made also on the odometer speed value, naturally after a first evaluation of the scale factor.

The system makes use of a sample accumulator register in a floating point real format and a sample counter. The values of the scale factor computed by dividing the GPS speed value by the number of pulses per second are added within the accumulator provided that the acceleration between two subsequent GPS points is not greater than M (for example 0.25 m/s2) and the value of the speed sample is greater than K (e.g. 12.5 m/s). Preferably, the system further comprises a control of time continuity between two GPS values, to avoid acquiring samples at the presence of an intermittent signal (which indicates bad receiving conditions) and also to avoid computing an average acceleration, but rather a value based on time intervals in the order of one second. A GPS speed value is then taken into consideration only if it is preceded at a time distance equal to or lower than X (e.g. one second) by another value.

An acceleration control is carried out also on the odometer's value, however only after the first evaluation of the odometer scale factor which, although being rough enables the acceleration in m/s2 to be computed.

Finally, the system preferably comprises a protection on the number of odometer pulses used in the computation of the scale factor. Since indeed this number is at the denominatore in the above indicated formula, if no pulses are recorded because of a connection error, there is the risk of dividing by zero which causes a mathematical error and the sudden increase of the evaluated scale factor. The division is therefore carried out only if the number of recorded pulses during the last second is consistent with a range of possible variation of the speed (e.g. from 0 through 400 kg/h) and with the minimum and maximum resolutions of the odometers on the market.

In the preferred embodiment of the invention, the determination of the scale factor of the odometer is carried out during a first transient stage in the following way.

The GPS speed sample is added K1 times to the accumulator and the counter is increased by K1 if the speed is between A (e.g. 12.5) and B (e.g. 17.5) m/s.

The speed sample is added K2 times to the accumulator and the counter increased by K2 (greater than K1) if the speed is between B (e.g. 17.5) and C (e.g. 25.0) m/s.

The speed sample is added K3 times to the accumulator and the counter increased by K3 (greater than K2) is the speed is greater than C (e.g. 25.0) m/s.

The odometer scale factor is determined by dividing the numerical value of the accumulator by the number of samples memorized within the counter. An average which is progressively more accurate is obtained, since it is made on an increasing number of samples.

In order to avoid missing data as a result of a vehicle stop, the contents of the two registers (accumulator and counter) and the scale factor are periodically stored in a non-volatile memory (EEPROM). The data are saved at the first evaluation, and then by steps of K4 (e.g. 20 after each other). During the convergence stage, therefore, there are carried out K5 (e.g. 51) memorizations of data.

The accumulation ceases at the end of said transient stage, when the counter reaches or passes a value K6 (e.g. 1000); therefore it can be either (K6 - 1 + K1) (e.g. 1000) or (K6 - 1 + K2) (e.g. 1001) or (K6 - 1 + K3) (e.g. 1002) depending upon the weight of the last sample. From this time instant onward, the counter is no longer increased, whereas at each new sample available 1/ (K6 - 1 + K1...K2...K3) (e.g. 1/1000...1001...1002) of the value thereof is subtracted from the accumulator and the value of the new sample is added. The weights keep on being valid, so that K1...K2...K3 / (K6 - 1 + K1...K2...K3) (e.g. 1...2...3 / 1000...1001...1002) is subtracted before the sample is added K1 or K2 or K3 times. The system according to the invention is therefore able to update continuously the odometer scale factor, even after reaching a stable condition. These variations can be caused for example by the replacement (or the progressive wear) of tires and the load variations of the vehicle. Under stable conditions, the memorization of the new scale factor is carried out each time that the computed factor differs from that saved in EEPROM by more than a K7 (e.g. 0.3) percentage.

The system according to the invention is further able to react to sudden variations in the odometer scale factor. Since, under stable conditions, the algorithm provides a value which is the average of one thousand of values of computed scale factors, it is also very slow to react to any variation of odometer type, e.g. when the navigation system is moved to another motor-vehicle. For this reason, the system provides for the use of a second accumulator and a second counter, on which the same processes made on the primary registers are duplicated, which however, contrary to the latter, are cancelled each time the system is turned off and each time the second counter reaches and passes a value K8 (e.g. 100). The algorithm on the secondary registers is therefore always in a convergence stage, so that it is able to reach much more rapidly values different from those of the primary registers. Every K8 samples which are picked up, the difference between the scale factor value obtained from the two registers is controlled and, when this difference passes a K9 (e.g. 5) percentage, the contents of the primary registers is cancelled and replaced by that of the secondary registers. The estimated value therefore can change also suddenly, adapting quickly even to important percentage variations of the scale factor of the instrument.

In the following, the calibration method of the rate gyro will be now described.

In general, a gyroscope is a relative direction sensor. Contrary to the bussola, indeed, it is only able to detect variations of direction, and not absolute directions. The gyroscopes are divided into gyroscopes proper, which give at the output a signal proportional to the rotation angle, and rate gyros, which give at the output a signal proportional to the angular speed. In the following, reference will be made to a rate gyro, since the system according to the invention preferably provides a gyroscope of this type, mainly for reasons of cost.

The rate gyros used in the motor-vehicle navigation systems are generally piezoelectric sensors, based on the principle that a ceramic bar, when caused to oscillate, tends to keep a fixed orientation of its vibration plane, and to resist direction variations, by generating a force normal to the place itself. Sensors placed on the bar detect the movements induced by the rotation and generate a signal whose magnitude is directly proportional to the rotational speed. By integrating with the time the angular speed signal, the information on the angular position can be detected. The rate gyros of this type generally have a linear reply to rotational speeds from 0 through a few tens of degrees per second (usually 70-80), with a resolution substantially dictated by the bit number on which the analogic signal at the output is quantizzato and the electric noise superimposed thereon.

The problem of the calibration of a rate gyro substantially lies in the determination of two parameters: offset and scale factor.

By offset the difference is meant between the voltage at the output of the rate gyro at rest (angular speed amounting to 0°/s) and the voltage value of scale centre (usually 2.5V, if the rate gyro is supplied between 0 and 5 Volts).

By scale factor the ratio is meant between the mV value of the voltage at the output of the rate gyro (deduced of the 2.5V of scale centre and the offset) and the angular speed in degrees/seconds applied to the rate gyro itself, even if for navigation purposes the opposite is more interesting (i.e. how many °/s correspond to a value in mV read on the instrument).

The derivative nature of the signal at the output of the rate gyro renders the offset evaluation critical. An offset evaluated only roughly, indeed, introduces an angular speed error which, when integrated, determines a direction error increasing with the time. The offset of the rate gyro must therefore be evaluated with the maximum possible precision. In most cases, indeed, the rate gyros have very high offset corrections, due in most part to temperature variations, above all in the first minutes of operation. It is to be reminded that an error of only 0.1°/s, when integrated over 10 minutes, causes an error of 60° in direction. Errors of 1°/s or more cause direction corrections which are so quick as to affect the quality of the estimated navigation even only after a couple of seconds.

The Problem of the determination of the offset is twofold, since it is necessary to evaluate the offset both with the maximum precision, and with the maximum possible frequency. The solution of this problem can be relatively simple when the evaluation is carried out with the vehicle at rest, when the rate gyro is not subjected to a rotation. However, the system according to the invention is able to carry out the offset determination even during the normal navigation, i.e. it can carry out a dynamic evaluation.

The static evaluation of the offset can be carried out quite simply, when the motor-vehicle is at rest. In this case, the signal at the output of the rate gyro can be divided as follows:

$$Vout = Vreal\ (\Omega in) + Voffset$$

thus separating the component which depends from the real rotational speed at the input $\Omega$in, from the pure offset component, which is unuseful for determine the rotations. The simplest way to evaluate the offset is that of nullifying the input angular speed, thus nullifying the dynamic component of the rate gyro reply, so that

$$Vout = Voffset$$

The static evaluation of the offset is therefore the pure reading of the data at the output of the rate gyro when the navigation system is at rest, assuming that, in the absence of odometer pulses, the vehicle is not able to rotate.

As a matter of fact, a certain caution is necessary when assuming the rate gyro data as offset, because, with odometers having low resolution, the vehicle could be already rotating although the odometer does not yet give any signal of displacement. For this reason, it is preferable to provide for the rate gyro data to be read consecutively at each X1 (e.g. 200) ms during X2 (e.g. 4) seconds, and if during all this time there are no odometer pulses, the value taken in the central X1 (e.g. 200) ms of the time interval is assumed as offset. In this manner, the possibility exist to wait for any odometer pulses before giving validity to the offset sample which is taken. If pulses appear before the end of the X2 (e.g. 4) seconds, all the taken samples are rejected and other X2 (e.g. 4) seconds are obtained. Vice versa, if the stop extends over more than X2 (e.g. 4) seconds, the offset taken X2/2 (e.g. 2) seconds before movement of the vehicle is considered as being valid.

As already indicated, the static evaluation has the advantage of simplicity and high accuracy, but is not sufficient to insure that offset variations are followed, unless the user is compelled to periodically stop the vehicle for a calibration, which can not be proposed.

Therefore, the problem exist of evaluating the offset during normal navigation.

As already indicated at the beginning of the present description, the main idea of the invention is that of exploiting the GPS receiver as a source of absolute direction, similarly to a bussola, and sufficiently accurate as to enable the offset component present on the signal at the output of the rate gyro to be determined.

It is not strictly necessary that the GPS receiver provides directly the direction information at the output. The direction data can be indeed deduced from the speed components of the motor-vehicle by simply using the arctan function:

$$\text{Direction (referred to North)} = \arctan \frac{\text{(Speed East)}}{\text{(Speed North)}}$$

taking care of solving suitably the problem of the evaluation of angles having a value greater than 90°, emitting suitable protections from mathematical overflow in case the denominatore goes to 0.

The problem of the determination of the direction of movement on the basis of the North East components of the GPS speed has a solution however only beyond a given speed, which depends from the noise and the disturbances superimposed to the GPS data. If one assumes indeed that the GPS speed value can be separated into a noise component and in a true value component, it may be understood how the determination of the direction is more reliable if the noise component is lower and the true value component is higher.

According to the invention, the offset evaluation is carried out on the basis of the error in the direction of the vehicle with respect to the true direction thereof, divided by the time during which this error has been accumulated. The information at the output of the rate gyro is integrated with the time starting from an instant at which the absolute direction of the vehicle is determined exactly by means of the GPS. The integration of the signal from the rate gyro takes to the determination of a vehicle rotation angle. This rotation angle can be divided into two parts:

$$\text{Rate gyro angle (t)} = \text{True angle (t)} + \alpha.\text{Voffset}.t$$

where $\alpha$ is the rate gyro scale value and $t$ is the time from the beginning of the accumulation of the integration of the signal at the output of the rate gyro. Since $\alpha$ and $t$ are known, the only incognita to be solved in order to correctly evaluate Voffset is the true rotation angle of the vehicle. This measurement is carried out on the basis of the difference between the initial GPS direction which has given rise to the accumulation and the GPS direction which is taken into consideration after a given time.

Therefore, the offset is the following:

$$\text{Voffset} = \frac{\text{(Rate gyro angle (t) - True (GPS) angle (t))}}{\alpha.t}$$

The time interval $t$ which is used runs from a minimum of X3 (e.g. 30) seconds up to a maximum of X4 (e.g. 180) seconds. The minimum value of the time interval is caused by the error in the evaluation of the direction by the GPS receiver. The greater is the error (e.g. 1-2°) which can be made by the GPS, the higher must be the minimum time interval during which the direction deriva must be observed, so as to limit the impact thereof on the offset evaluation.

As to the maximum time interval, it is necessary to make some remarks. Theoretically, the offset evaluation improves if the time interval during which the observation is carried out is longer, but some limits are better posed which are due to caution and experience. First of all the offset evaluation is the result of an average during the selected time interval, for which reason very quick derive require short time intervals if the evaluation must be precise (in case of piezoelectric rate gyros, during X4 seconds the offset may vary even of some tenths of °/s).

Secondly, if the offset voltage is relevant, it may introduce mock rotations even of tens of degrees in a few minutes, so that there is the risk that the accumulation becomes so huge to involve the indetermination due to the 360° period of the direction.

The first control is made on the precision of the GPS direction, which is paramount for conducting an accurate evaluation of the offset.

A GPS direction is considered as being good only at speeds of value greater than K1 (e.g. 9) m/s and only if the variations of the value between two subsequent directions are lower than K2 (e.g. 1) degrees for more than K3 /e. g. 3) consecutive times.

A limit has also been introduced to the sum of the variations, which must be lower than K4 (e.g. 2) degrees to avoid that the system can be activated in a curve, even if at a very low speed. The other controls which have been introduced are due to the observation that the algorithm is critical at the presence of an offset in the order of some degree per second. With such an offset the case might occur that the accumulation of the rate gyro angle is in the order of one complete round even within a few tens of seconds. In this case, the simple difference between two GPS directions is not sufficient to distinguish whether the accumulation is due entirely to the offset or if the vehicle has really made one complete round on itself. For this reason, it has been considered advisable to pose a limit to the accumulation of the angle integrated by the rate gyro. This limit is fixed at X5 (e.g. 135) degrees. A limit has been posed also to the true angular variation, measured by the GPS. This limit has been fixed at X6 (e.g. 45) degrees. The combination of the data coming from the GPS and the data which are accumulated by the rate gyro integration enables the versus of the direction deriva and hence the sign of the offset to be unambiguously determined. The limit to the accumulation of the integrated angle, however, prevents high offset voltages to be evaluated. Since in these situations such evaluation is absolutely necessary, the system according to the invention carries out a differential evaluation of the offset. By differential evaluation the evaluation is meant of the variations of the offset with respect to the last calculated value. In the assumption of evaluating the offset with a sufficient frequency, this should insure that relatively low numerical values are involved.

The above described algorithm for the dynamic evaluation is able to operate between two evaluations of GPS direction which are spaced from each other a time between X3 (e.g. 30) and X4 (e.g. 180) seconds, provided that during this time the vehicle has not rotated by X6 (e.g. 45) degrees and the accumulation has not passed the threshold of X7 (e.g. 135) degrees. These restrictions limit the offset evaluation number too much, particularly on hill or mountain roads, which are winding and where the GPS reception is not frequent. Therefore, in order to improve the performances, the system according to the invention records some GPS direction data, the corresponding accumulations of integrated angles and the accumulation time in a matrix. A matrix is obtained with X8 (e.g. 5) lines of data. Every X9 (e.g. 15) seconds the writing of one line is enabled and all cross checks are made in order to see that in the matrix there is at least a data consistent with all the checks of the algorithm that can serve to dynamically evaluate the offset. Among all the data that at the longer time is selected. In this manner, the chance is increased of having some data useful for an evaluation and the frequency of the evaluations is improved. Under stable conditions, indeed, an evaluation can occur every X9 (e.g. 15) seconds, after the transient period of the first X3 (e.g. 30) seconds which are necessary in order to have at least two data in the table. The matrix is deleted when a static offset is calculated, or when the maximum time of X4 seconds has run.

The second characteristic parameter of a rate gyro if the scale factor. The problem of the evaluation thereof is much less critical than that of the offset. First of all, the variation range of the scale factor with respect to the nominal value declared by the manufacturer is much less wide with respect to that of the offset. Secondly, the effect of a wrong evaluation of this parameter is less dangerous than that of the offset. It is sufficient to consider that a 3% error in the evaluation of the scale factor causes direction errors of only 2.7° after 90° curves, which are very frequent in town. The inaccuracy of the evaluation begins to weigh clearly after U turns or slopes on highways (or in a garage). Anyhow it is true that the temperature variations and the age of the sensor can lead to sufficiently clear variations of the scale factor. It is possible to evaluate the scale factor on the basis of the GPS direction data. The basic idea is the same used to evaluate the offset, with the difference that in this case one tries to keep at minimum the offset contribution and to keep at maximum that due to the true rotations of the vehicle. In practice, the value of the true angular variation (calculated on the basis of the GPS data) must be divided by the accumulation of the angle integrated by the rate gyro.

Thus:

$$\text{True angle (t)} = \alpha.\text{Vout.t}$$

where Vout.t represents the angle integrated by the rate gyro and $\alpha$ is the scale factor. From which:

$$\alpha = \frac{\text{True GPS angle (t)}}{\text{Vout.t}}$$

Also for this evaluation the checks on the prevision of the GPS direction value which have been described for the algorithm used in the offset dynamic evaluation apply. Contrary to the offset evaluation, instead, the scale factor evaluation is negatively affected by the time duration of the evaluation. This is the main reason for which the system according to the invention poses a maximum time limit of T1 (e.g. 20) seconds within which the measurement must be made. If indeed the time becomes too long, the influence of a non-correctly evaluated offset can be felt and cause a deterioration in the precision of the scale factor evaluation. The separation of the two parameters is one of the main conditions for carrying out a good evaluation for this latter algorithm. The first way for separating these parameters is indeed reducing as much as possible the evaluation time, but it is advisable to pose a minimum rotation threshold of W1 (e.g. 90) degrees for reducing the effect of errors in the GPS evaluation and the offset.

From the foregoing description, it is clearly apparent that the system according to the invention enables an automatic calibration of the sensors (odometer and rate gyro) on-board the motor-vehicle to be carried out during navigation on the basis of the data provided by the GPS receiver.

## Claims

1. Motor-vehicle navigation system, comprising:

   - computer means (2) on-board the motor-vehicle,
   - relative displacement and relative direction sensor means (6), located on-board the motor-vehicle, to provide said computer means (2) with data useful for the determination by said computer means (2) of the position and direction of the motor-vehicle,
   - information support means (4), associated with said computer means, including a database of maps of a territory through which the vehicle has to travel,

   in which said computer means are adapted to refine the localisation of the motor-vehicle position carried out on the basis of the data from said sensor means by a comparison operation between the position evaluated thereby and the map of the territory included within said database,

   - a GPS receiver (5), also on-board the motor-vehicle, to provide said computer means (2) with data indicative of the absolute position and the absolute speed (with respect to value and direction) of the motor-vehicle, and
   - user interface means (7), for providing the user with optical and/or acoustical signals for assistance in navigation, which are processed by said computer means (2) on the basis of the information coming from said sensor means and said GPS receiver and on the basis of the information included within said database,

   wherein said computer means are provided for comparing, during the motor-vehicle navigation, the data of said sensor means with the data of said GPS receiver and for automatically calibrating said sensor means on the basis of the results of this comparison,
   in which said relative displacement sensor means comprises an odometer,
   characterized in that said computer means are able to determine the scale factor of the odometer by comparing the speed calculated from the GPS receiver (5) with the number of pulses coming during the same time interval from the odometer (6),

   in that in the evaluation of the odometer scale factor, the GPS speed data is used only when it has a value greater than a pre-determined threshold value (K), and
   in that the values of the odometer scale factor calculated at different time instants by dividing the speed provided by the GPS receiver by the number of the pulses per second of the odometer are added in an accumulator, in order to allow an average value to be calculated, provided that the acceleration between two subsequent GPS detections is not greater than a pre-determined threshold value (M).

2. System according to claim 1, characterized in that the relative direction sensor means is constituted by a rate gyro, having an offset and a scale factor,

   in that said computer means is adapted to carry out a dynamic evaluation both of the offset and of the scale factor of the rate gyro, during the motor-vehicle navigation, on the basis of the GPS data,
   in that the dynamic evaluation of the offset of the rate gyro is carried out only at speeds having a value greater than a threshold value (K1) and only if the value variations between two subsequent directions provided by the GPS receiver (7) are lower than a pre-determined value (K2) for at least a pre-determined number (K3) of consecutive times, and
   in that the dynamic evaluation of the rate gyro offset is carried out only provided that the sum of said variations is lower than a pre-determined value (K4).

3. System according to claim 2, characterized in that the dynamic evaluation of the rate gyro offset is carried out only if the direction variation obtained by integration of the rate gyro data is lower than a pre-determined maximum value (X5).

4. System according to claim 3, <u>characterized in that</u> the dynamic evaluation of the rate gyro offset is carried out only if the angular variation measured by the GPS is lower than a pre-determined maximum value (X).

## Patentansprüche

1. Motorfahrzeug-Navigationssystem, aufweisend:

- eine Computereinrichtung (2) an Bord des Motorfahrzeugs,

- eine Relativverschiebungs- und Relativrichtungs-Sensoreinrichtung (6), plaziert an Bord des Motorfahrzeugs, um die Computereinrichtung (2) mit nützlichen Daten zu versorgen, zum Bestimmen der Position und der Richtung des Motorfahrzeugs durch die Computereinrichtung (2),

- eine Informationsunterstützungseinrichtung (4) der Computereinrichtung zugeordnet, welche eine Datenbank von Karten eines Geländes, durch welches das Fahrzeug sich bewegen soll, enthält,

wobei die Computereinrichtung angepaßt ist, das Lokalisieren der Motorfahrzeugposition zu verfeinern, das auf der Basis der von der Sensoreinrichtung kommenden Daten ausgeführt wird, durch eine Vergleichsoperation zwischen der dadurch ermittelten Position und der in der Datenbank enthaltenen Karte des Geländes,

- einen GPS-Empfänger (5), ebenfalls an Bord des Motorfahrzeugs, um die Computereinrichtung (2) mit Daten zu versorgen, die für die absolute Position und die absolute Geschwindigkeit (in bezug auf Wert und Richtung) des Motorfahrzeugs bezeichnend sind, und

- eine Benutzer-Schnittstelleneinrichtung (7), um den Benutzer mit optischen und/oder akustischen Signalen zur Bewegungsunterstützung zu versorgen, welche durch die Computereinrichtung (2) auf der Basis der von der Sensoreinrichtung und dem GPS-Empfänger kommenden Informationen und auf der Basis der in der Datenbank enthaltenen Informationen verarbeitet werden,

wobei die Computereinrichtung vorgesehen ist, während der Fahrzeugbewegung die Daten von der Sensoreinrichtung mit den Daten des GPS-Empfängers zu vergleichen und die Sensoreinrichtung auf der Basis der Ergebnisse dieses Vergleichs automatisch zu kalibrieren,
wobei die Relativverschiebungs-Sensoreinrichung einen Kilometerzähler aufweist,
dadurch gekennzeichnet, daß die Computereinrichtung fähig ist, den Skalierungsfaklor des Kilometerzählers zu bestimmen, durch Vergleichen der vom GPS-Empfänger (5) ermittelten Geschwindigkeit mit der während desselben Zeitintervalls vom Kilometerzähler (6) kommenden Anzahl von Impulsen,

daß bei der Ermittlung des Kilometerzähler-Skalierungsfaktors die GPS-Geschwindigkeitsdaten nur benutzt werden, wenn sie einen Wert größer als einen vorbestimmten Schwellenwert (K) haben, und

daß die Werte des Kilometerzähler-Skalierungsfaktors, der zu verschiedenen Zeitpunkten, durch Teilen der vom GPS-Empfänger gelieferten Geschwindigkeit durch die Anzahl von Impulsen pro Sekunde vom Kilometerzähler, berechnet wird, in einem Akkumulator addiert werden, um das Berechnen eines Mittelwertes zu ermöglichen, vorausgesetzt daß die Beschleunigung zwischen zwei aufeinanderfolgenden GPS-Erfassungen nicht größer als ein vorbestimmter Schwellenwert (M) ist.

2. System nach Anspruch 1, dadurch gekennzeichnet, daß die Relativrichtungs-Sensoreinrichtung durch einen Wendekreisel gebildet wird, welcher einen Offset und einen Skalierungsfaktor hat,

daß die Computereinrichtung angepaßt ist, eine dynamische Ermittlung sowohl des Offsets als auch des Skalierungsfaktors des Wendekreisels während der Motorfahrzeug-Bewegung auf der Basis der GPS-Daten auszuführen,

daß die dynamische Ermittlung dcs Offsets des Wendekreisels nur bei Geschwindigkeiten ausgeführt wird, die einen größeren Wert als einen Schwellenwert (K1) haben und nur wenn die Wertänderungen zwischen zwei aufeinanderfolgenden Richtungen, die vom GPS-Empfänger (7) geliefert werden, geringer als ein vorbestimmter Wert (K2) sind, für mindestens eine vorbestimmte Zahl (K3) von aufeinanderfolgenden Zeiten, und

daß die dynamische Ermittlung des Wendekreisel-Offsets nur ausgeführt wird, vorausgesetzt daß die Summe der Änderungen geringer als ein vorbestimmter Wert (K4) ist.

3. System nach Anspruch 2, dadurch gekennzeichnet, daß die dynamische Ermittlung des Wendekreisel-Offsets nur ausgeführt wird, wenn die Richtungsänderung, die durch Integration der Wendekreisel-Daten erhalten wird, geringer ist als ein vorbestimmter Maximalwert (X5).

4. System nach Anspruch 3, dadurch gekennzeichnet, daß die dynamische Ermittlung des Wendekreisel-Offsets nur ausgeführt wird, wenn die vom GPS gemessene Winkeländerung geringer ist als ein vorbestimmter Maximalwert (X).

## Revendications

1. Système de navigation pour véhicule à moteur, comprenant :

   - un dispositif calculateur (2) embarqué sur le véhicule à moteur,
   - des dispositifs capteurs (6) du déplacement relatif et de la direction relative, placée à bord du véhicule à moteur et destinés à donner au dispositif calculateur (2) des données utiles pour la détermination par le dispositif calculateur (2) de la position et de la direction du véhicule à moteur,
   - un dispositif (4) de support d'informations associé au dispositif calculateur et comprenant une base de données de carte d'un territoire que doit parcourir le véhicule,

   dans lequel le dispositif calculateur est destiné à affiner la localisation de la position du véhicule à moteur d'après des données provenant des dispositifs capteurs par une opération de comparaison entre la position évaluée de cette manière et la carte du territoire incluse dans la base de données,

   - un récepteur GPS (5) qui est aussi embarqué dans le véhicule à moteur et destiné à donner au dispositif calculateur (2) des données représentatives de la position absolue et de la vitesse absolue (en valeur et en direction) du véhicule à moteur, et
   - un dispositif (7) d'interface avec l'utilisateur destiné à donner à l'utilisateur des signaux optiques et/ou acoustiques facilitant la navigation, qui sont traités par le dispositif calculateur (2) d'après l'information provenant des dispositifs capteurs et du récepteur GPS et d'après les informations incluses dans la base de données,

   dans lequel le dispositif calculateur est destiné à comparer, pendant la navigation du véhicule à moteur, les données des dispositifs capteurs et les données du récepteur GPS et à étalonner automatiquement les dispositifs capteurs d'après les résultats de cette comparaison, et
   dans lequel le dispositif capteur d'un déplacement relatif est un odomètre,
   caractérisé en ce que le dispositif calculateur peut déterminer le facteur d'échelle de l'odomètre par comparaison de la vitesse calculée à partir du récepteur GPS (5) au nombre d'impulsions provenant pendant le même intervalle de temps de l'odomètre (6),

   en ce que, dans l'évaluation du facteur d'échelle de l'odomètre, les données de vitesse GPS sont utilisées uniquement lorsque la valeur est supérieure à une valeur prédéterminée de seuil (K), et
   en ce que les valeurs du facteur d'échelle de l'odomètre calculées à des instants différents par division de la vitesse donnée par le récepteur GPS par le nombre d'impulsions par seconde de l'odomètre sont ajoutées dans l'accumulateur afin qu'une valeur moyenne soit calculée, pourvu que l'accélération entre deux détections GPS successives ne soit pas supérieure à une valeur prédéterminée de seuil (M).

2. Système selon la revendication 1, caractérisé en ce que le dispositif capteur de direction relative est constitué d'un gyromètre qui a un décalage et un facteur d'échelle,

   en ce que le dispositif calculateur est destiné à effectuer une évaluation dynamique à la fois du décalage et du facteur d'échelle du gyromètre, pendant la navigation du véhicule à moteur, d'après les données GPS,

en ce que l'évaluation dynamique du décalage du gyromètre est réalisée uniquement à des vitesses dont la valeur est supérieure à une valeur de seuil (K1) et uniquement si les variations des valeurs entre deux directions successives données par le récepteur GPS (7) sont inférieures à une valeur prédéterminée (K2) pendant au moins un nombre prédéterminé (K3) de temps consécutifs et,

en ce que l'évaluation dynamique du décalage du gyromètre est réalisée uniquement lorsque la somme des variations est inférieure à une valeur prédéterminée (K4).

3. Système selon la revendication 2, caractérisé en ce que l'évaluation dynamique du décalage du gyromètre est réalisée uniquement lorsque la variation de direction obtenue par intégration des données du gyromètre est inférieure à une valeur maximale prédéterminée (X5).

4. Système selon la revendication 3, caractérisé en ce que l'évaluation dynamique du décalage du gyromètre est réalisée uniquement lorsque la variation angulaire mesurée par le système GPS est inférieure à une valeur maximale prédéterminée (X).

EP 0 806 632 B1

12